Europäisches Patentamt

European Patent Office

Office européen des brevets

(11) Veröffentlichungsnummer: **0 013 927**
**B1**

(12) **EUROPÄISCHE PATENTSCHRIFT**

(45) Veröffentlichungstag der Patentschrift:
27.04.83

(51) Int. Cl.³: **B 29 F 3/02**, B 29 F 1/02

(21) Anmeldenummer: 80100169.4

(22) Anmeldetag: 14.01.80

(54) **Bimetallzylinder für Kunststoffverarbeitungsmaschinen.**

(30) Priorität: 18.01.79 DE 2901794

(43) Veröffentlichungstag der Anmeldung:
06.08.80 Patentblatt 80/16

(45) Bekanntmachung des Hinweises auf die Patenterteilung:
27.04.83 Patentblatt 83/17

(84) Benannte Vertragsstaaten:
AT BE CH DE FR GB IT LU NL SE

(56) Entgegenhaltungen:
DE-A-2 241 888
DE-C-496 115
FR-A-2 242 224
GB-A-1 107 939
GB-A-1 387 416
US-A-2 386 747
US-A-3 268 949
US-A-3 416 774
US-A-4 133 460

(73) Patentinhaber: INTERATOM Internationale
Atomreaktorbau GmbH, Friedrich-Ebert-Strasse,
D-5060 Bergisch Gladbach 1 (DE)

(72) Erfinder: Cyron, Theo, Hüttenfeld 1, D-5060 Bergisch
Gladbach 3 (DE)

(74) Vertreter: Mehl, Ernst, Dipl.-Ing., Postfach 22 01 76,
D-8000 München 22 (DE)

Bimetallzylinder für Kunststoffverarbeitungsmaschinen

Die Erfindung betrifft Zylinderrohre für Kunststoffverarbeitungsmaschinen wie Kunststoffextruder, Kunststoffspritzmaschinen oder dergleichen, deren Innenflächen durch verschleiss- bzw. korrosionsfeste Metallschichten gegen vorzeitigen Abtrag geschützt werden, sogenannte Bimetallzylinder.

Der Stand der Technik wird in den „VDI-Nachrichten" vom 10.03.78 auf Seite 11 ausführlich dargestellt. Die zunehmende Verarbeitung von gefüllten und verstärkten duro- und thermoplastischen Kunststoffen mit einer Vielzahl von Füllstoffen, wie Glas- und Asbestfasern, Talkum, Titanoxid u. dgl., kombiniert mit einer Erhöhung der Durchsatzleistung, Zyklenfolge und Kompression, bedingt eine steigende Verschleissbeanspruchung der mit dem Produktmedium in Berührung kommenden Teile der Verarbeitungsmaschine, so dass diese im Vergleich zu den bei ungefüllten Kunststoffen benutzten Teilen vorzeitig ausfallen und somit neben den hohen Ersatzteilkosten unrentable Produktionsausfälle während der Reparaturzeit entstehen. Der Verschleiss wird verursacht durch Abrasion (mechanische Abnutzung) und Korrosion (chemische Abnutzung), wobei beide Effekte sich nicht nur überlagern, sondern auch in Verbindung mit ihrer dauernden Wechselwirkung in steigender Auswirkung gegenseitig beeinflussen können. Da bei den für Zylinder von Kunststoffextruder- und- spritzmaschinen üblicherweise verwendeten Nitrierstählen die Nitrierhärte der Innenoberfläche mit zunehmender Tiefe der Nitrierschicht sehr schnell abnimmt, entstehen bei der Verarbeitung von verstärkten oder gefüllten Kunststoffen mit abnehmender Nitrierschichthärte erhebliche, progressiv steigende Abtragsraten, so dass Nitrierzylinder in modernen Hochleistungsmaschinen aus Wirtschaftlichkeitsgründen nur noch bedingt einsetzbar sind und man vor Jahren bereits damit begann, Zylinderrohre mit bedeutend dickeren Panzerschichten aus verschleissfesten Werkstoffen auszukleiden. Bei den Panzerschichten der Bimetallzylinder bleiben Härte, Gefügebau und sonstige Werkstoffcharakteristiken über den grössten Teil der Schichtdicke konstant, wodurch sich in Verbindung mit verbesserten tribologischen Eigenschaften die Standzeitdauer dieser Maschinenteile um ein Vielfaches (4-20fach) erhöht. Durch eine klare Trennung der Funktionen lassen sich bei dieser Verbundlösung Verschleissfestigkeit und Korrosionsbeständigkeit des Innenrohres und Festigkeit des Aussenrohres unabhängig voneinander optimieren sowie die Laufeigenschaften im Innenrohr hinsichtlich des Gleit- und Notlaufverhaltens erheblich verbessern. Die hierdurch erreichbare hohe Verschleissfestigkeit der Zylinderinnenwand erlaubt darüber hinaus gegenüber nitrierten Zylindern eine bedeutende Steigerung der Ausstossleistung unter voller Nutzung der Maschinenreserven. Bimetallzylinder werden nach verschiedenen herstellerspezifischen Fertigungsmethoden angefertigt, wobei sich die unterschiedlichen Fertigungsverfahren in 2 Gruppen, dem Ausschleudern und dem Ausbüchsen, zusammenfassen lassen. Beim Schleudergiessverfahren werden die jeweils nach spezieller Herstellerrezeptur zusammengestellten Panzerlegierungen meist in körniger Form in die Bohrung des Trägerrohres eingebracht und unter Rotation des Trägerrohres um seine Achse bis zur Schmelztemperatur der Panzerlegierung aufgeheizt. Nachdem die Schmelze durch die Zentrifugalkraft auf dem Bohrungsumfang des Trägerrohres eine gleichmässige Schicht von ca. 2-5 mm gebildet hat, erfolgt die Erstarrung der Panzerlegierung durch Temperatursenkung auf 800-850° C. Durch Diffusion von Panzer- und Trägerwerkstoff entsteht zwischen beiden eine Zone metallurgischer Aufmischung mit molekularer Bindung. Die auf der Innen- bzw. Aussenoberfläche des Trägerrohres befindliche Guss- bzw. Zunderhaut sowie die Rohrendstücke (je Seite ca. 150 mm) werden zerspanend entfernt, wobei wegen ihrer hohen Werkstoffhärte die Bearbeitung der Innenwand besondere Abtragungsverfahren erfordert. Neben den zuvor geschilderten, generellen Vorteilen der Bimetallzylinder sind beim Schleudergiessverfahren aufgrund des Herstellungsverfahrens auch technische Nachteile hinsichtlich der Gestaltfestigkeit des Zylinders in Kauf zu nehmen. Diese entstehen hauptsächlich durch die erforderliche Hochtemperatur-Wärmebehandlung mit ihrem negativen Einfluss auf die Gefügestruktur von Trägerrohr- und Panzerungswerkstoff sowie die hiermit verbundenen thermischen Verzüge und Spannungen. Der Trägerwerkstoff neigt durch die Wärmebehandlung zur Grobkornbildung und verliert seine Härte bzw. Vergütungsfestigkeit, weshalb selbst bei Überdimensionierung der Rohrwandstärke nur eine begrenzte Anzahl von geeigneten Werkstoffen zur Verfügung steht. Der Verlust an Festigkeit führt andererseits bei Betriebsdaten von 2000 bar und 400° C zu grösserer Dehnung des Rohrumfanges, wodurch für das spröde Gussgefüge des Panzerungswerkstoffes aufgrund seiner relativ geringen Zugfestigkeit, insbesondere bei den Wechselbeanspruchungen der Spritzgiessmaschinen, die Gefahr von Rissbildung und Abplatzungen besteht, wenn nicht durch entsprechende Dimensionierung des Aussenrohres die Bohrungsdehnung auf < 0,1% des Bohrungsumfanges eingeschränkt wird oder durch aufwendige Verfahren eine spätere thermische Werkstoffrückvergütung erfolgt.

Wegen der sehr aufwendigen Herstellungsweise der Schleuderguss-Bimetallzylinder und ihren obengenannten Nachteilen, gewinnt mit zunehmendem Trend zu hochfesten Kompaktanlagen der seit langem bekannte Extruderzylinder mit eingeschobener, verschleiss- und/oder korrosionsfester Buchse stetig an Bedeutung. Seine Fertigungsproblematik besteht jedoch einerseits in den sehr hohen geometrischen Toleranzanforderungen an die Bohrung des Trägerrohres und die Aussenform der relativ dünnwandigen und dadurch flexiblen und zu Verzug neigenden Büchse sowie andererseits in der passgenauen Einbringung der Auskleidung. Die Buchsen haben gewöhnlich eine Wandstärke zwischen 4-15 mm und bestehen entweder aus massivem Panzerungswerkstoff oder aus nach dem Schleudergiessverfahren oberflächengepanzerten Trägerbuchsen. Da das Einschrumpfen der Buchsen mit engem Passungsspiel ab einer gewissen Länge (ca. 10 bis 25 ∅) wegen der geringen Wärmekapazität der dünnen Buchse nicht mehr durchführbar ist, werden die Buchsen üblicherweise kalt eingepresst. Die hierbei infolge des erforderlichen Untermasses unvermeidlich entstehenden örtlichen Spalte lassen sich oft nicht genügend gegen das Gehäuse abdichten, so dass sie sich teils mit Reiboxyd, Korrosionsprodukten und verkokter Schmelze füllen. Diese Zwischenschichten und der unterschiedliche metallische Kontakt zwischen Trägerrohr und Buchse aufgrund unterschiedlicher Spaltbreiten behindern den Wärmeübergang und beeinträchtigen die Prozesssteuerung durch örtlich abweichende Temperaturen. Die Spalthohlräume bewirken darüber hinaus bei Betriebsdrücken von ca. 2000 bar eine Dehnung des Buchsenumfanges, so dass die entstehende Zugspannung an der Gleitoberfläche der Panzerung die Gefahr der interkristallinen Korrosion begünstigt, was wiederum zu Rissen, Abplatzungen und Ausbröckelungen führen kann. Die in ihrer Herstellung schon sehr materialaufwendige Buchse trägt nicht zur Gestaltfestigkeit des Trägerrohres bei, wodurch auch die äusseren Abmessungen eines aus hochfesten Werkstoffen gefertigten Trägerrohres mindestens um die doppelte Buchsenwandstärke grösser ausgeführt werden müssen.

In dem deutschen Patent Nr. 496115 wird ein Verfahren beschrieben, wonach ein Rohr aus einem verhältnismässig weichen und leichten Metall, z.B. aus Aluminium, mit einer Stahl- oder Hartmetallbuchse versehen wird, die als Gelenkbolzen dienen soll. Das dort als Buchse bezeichnete Innenrohr wird mit einem Übermass zur Innenbohrung des Aussenrohres hergestellt, in sehr engen Grenzen elastisch verformt und axial in die Bohrung des Aussenrohres eingeschoben. Dafür müssen die Teile unter Einhaltung einer jeweils bestimmten Übermasstoleranz genauestens vorgearbeitet sein. Aus heutiger Sicht entspricht dieser Einpressvorgang einem Kaltpresssitz, dessen Herstellbarkeit aufgrund der erforderlichen Beul- und Knickfestigkeit des Innenrohres sehr wesentlich vom Verhältnis des Durchmessers zur Wandstärke und Länge des Innenrohres bestimmt wird und der für die folgende Aufgabe keine Lösung bietet.

Aufgabe der vorliegenden Erfindung ist es, bei einem Bimetallzylinder für Kunststoffverarbeitungsmaschinen, bestehend aus einem dickwandigen druckfesten und temperaturbeständigen Aussenrohr und einem dünnwandigen verschleiss- bzw. korrosionsfesten Innenrohr das Aussen- und Innenrohr ohne thermische Behandlung miteinander in Kontakt zu bringen, damit in beiden Fällen der jeweils optimale Werkstoff verwendet werden kann; das Innenrohr soll mit geringem Aufwand montierbar sein und nur geringe Nachbearbeitung erfordern; der Wärmeübergang zwischen Aussen- und Innenrohr soll homogen sein, daher soll kein Spalt vorhanden sein. Bindende Zwischenschichten sollen vermieden werden, damit ein verschlissenes Innenrohr leicht ausgewechselt werden kann.

Zur Lösung dieser Aufgabe wird ein Bimetallzylinder nach Anspruch 1 vorgeschlagen. Das Innenrohr aus nahezu jedem gewünschten Material lässt sich durch bekannte aufweitende Arbeitsverfahren, wie z.B. Hämmern, Walzen oder Explosiv-Umformen, im Aussenrohr bei Raumtemperatur anformen. Die innere Oberfläche des Innenrohres erfordert nach diesen bekannten Verfahren oder einer Kombination dieser bekannten Verfahren keine wesentliche Nachbearbeitung mehr; allenfalls müssen die Enden des Innenrohres sorgfältig abgeschnitten werden. Infolge der plastischen Verformung werden Spalte zwischen Aussen- und Innenrohr vermieden. Die tangentiale Druckspannung im Innenrohr, die annähernd die Streckgrenze erreichen sollte, hält dieses im Aussenrohr einwandfrei fest. Dennoch kann das verschlissene Innenrohr leicht entfernt werden, indem es an einer Stelle des Umfanges in Längsrichtung aufgetrennt wird. Bei der Montage wird das zu dünnwandigen Rohren grober Toleranz vorverarbeitete Innenrohr aus einem zähen, verschleiss- bzw. korrosionsfesten Werkstoff in das Aussenrohr mit grossem Passungsspiel von Hand eingebracht und mittels mechanischer Kaltumformung unter Abstreckung der Wandstärke durch spezifisch hohe radiale Druckbelastung spaltfrei mit direktem metallischen Kontakt in das Aussenrohr eingeformt. Der hohe Kaltverformungsgrad (bis zu 90% der Innenrohrwandstärke) garantiert hierbei eine spaltfreie Verfüllung von Nuten, Rillen oder Vertiefungen mit dem Werkstoff des Innenrohres zur Aufnahme von Axial- und Torsionskräften ohne eine Bindung oder Haftung zwischen Innenrohr- und Aussenrohrwerkstoff in radialer Richtung.

Die mit der Erfindung erzielten Vorteile bestehen insbesondere darin, dass der unter hoher tangentialer Druckspannung stehende Werkstoff des Innenrohres ohne bindende Zwischenschichten spaltfrei in direktem metallischen Kontakt durch mechanische Kaltumformung und somit ohne thermische Einwirkung auf beide Kontaktwerkstoffe in das Aussenrohr eingeformt ist, wodurch jeglicher Einfluss auf die Festigkeit des Aussenrohrwerkstoffes etwa durch thermische Gefügeänderungen oder schädliche, metallurgische Aufmischung mit dem Innenrohrwerkstoff sowie Wärmeverzug des Bimetallzylinders ebenso vermieden wird, wie inhomogene Temperaturverteilung durch Spalte oder nichtmetallische Zwischenschichten zwischen Innenrohr und Aussenrohr bei den bekannten eingeschrumpften oder axial eingedrückten Buchsenauskleidungen. Demzufolge können gegenüber ausgeschleuderten Bimetallzylindern als Aussenrohr prinzipiell alle Werkstoffe, sowohl Massenstähle auf breiter Basis als auch insbesondere hochtemperaturvergütete, warmfeste Qualitäten mit hohen spezifischen Belastungen verwendet werden, wodurch die Wirtschaftlichkeit von Hochleistungsmaschinen erheblich gesteigert wird. Da ferner mangels einer Wärmeeinbringung keine abzuspanende Zunderhaut entsteht, kann der Bimetallzylinder bereits vor der Auskleidung toleranzhaltig fertig bearbeitet sein, womit es auch möglich ist, Aussenrohre mehrfach nach Verschleiss des Innenrohres erneut auszukleiden bzw. vorhandene Nitrier- oder Bimetallzylinder durch Erneuerung der Verschleissschutzschicht wiederzuverwenden, da die erfingungsgemässen Innenrohre auch bei Wandstärken bis unter 0,5 mm keine Ausführungsprobleme darstellen. Hierdurch entfällt die bei nachträglicher verschleissfester Ausbuchsung von Nitrierzylindern entstehende Schwierigkeit einer Festigkeitsminderung des Aussenrohres infolge Wandstärkenschwächung durch Aufbohren um mehrere Millimeter zur Aufnahme der Metallbuchse. Ferner ist es ein bedeutender Vorteil der vorliegenden Erfindung, dass das verschlissene Innenrohr sich sehr einfach aus dem Aussenrohr entfernen lässt. Aufgrund ihrer tangentialen Druckspannung und fehlender radialer Bindung löst sie sich durch gewaltsame Zerstörung ihrer radialen Stabilität (etwa durch Längstrennung) selbständig vom Aussenrohr, so dass dieses ohne irgendwelche zusätzlichen Arbeitsgänge wirtschaftlich neu ausgekleidet werden kann. Im Gegensatz zu dem konventionellen Zylinder mit eingeschobenen Bimetallbuchsen werden erfindungsgemäss an die Toleranzhaltigkeit der unausgekleideten Aussenrohrbohrung keine Anforderungen gestellt, da der Innenrohrwerkstoff während der spaltfreien Kalteinformung Massdifferenzen ausgleicht und somit stets Innenwandungen mit glatter, oberflächenverdichteter Verschleiss- und Korrosionsfläche garantiert. Eine oberflächenglättende spanabhebende Nachbearbeitung des Innenrohres ist nicht erforderlich. Das kalteingeformte Innenrohr steht unter streckgrenznahen tangentialen Druckspannungen, welche die naturgegebenen und somit reproduzierbaren positiven tribologischen Eigenschaften, z.B. ausgehärteter Nickelbasislegierungen sowie anderer hochfester metallischer Werkstoffe, hinsichtlich Gleit- und Notlaufverhalten sowie Verschleiss- und Korrosionsschutz ausserordentlich günstig beeinflussen. Die hohen tangentialen Druckspannungen eines zähharten, hochwarmfesten und elastischen Innenrohres bewirken in Verbindung mit der nicht vorhandenen radialen Bindung zum Aussenrohrwerkstoff bei Formänderungen oder Dehnungen des Bimetallzylinders durch den Betriebsdruck von 2000 bar oder thermische Einwirkungen bis über 500° C eine permanente spaltfreie Anlage des Innenrohres an das Aussenrohr, so dass inhomogene Temperaturverteilungen durch eine Behinderung des Wärmeüberganges und die hierdurch entstehende Regelträgheit der Prozesssteuerung nicht auftreten können. Auch die relativ dünnen Wandstärken des Innenrohres wirken sich auf die Wärmetauschercharakteristik des kaltausgekleideten Bimetallzylinders sehr positiv aus. Mit der Erfindung ist es möglich, Innenrohre einzubringen mit einer Wandstärke von 0,5 bis 4 mm oder mehr bei Durchmessern von 20 bis 400 mm oder mehr und bei Rohren von mehr als 1 m Länge. Ausgehend von einem zum Rohr verschweissten Blech aus einem zähen Walzgefüge, das durch die Kaltausformung während der Auskleidung des Aussenrohres zusätzlich gestreckt wird, entsteht eine homogene, poren- und rissfreie sowie hochverschleissfest- bzw. korrosionsfeste Panzerungsschicht für Kunststoffextruderzylinder mit gleichbleibender Härte über die gesamte Schichtdicke und mit hoher Temperaturwechselbeständigkeit. Neben den vielen anderen werden auch die werkstoffspezifischen Nachteile der bisher bekannten Auspanzerungen von Bimetallzylindern, wie schädliche Aufmischung der Kontaktwerkstoffe, Abplatzung, Ausbröckelung oder Rissbildung infolge von Ermüdungsbrüchen spröder Guss- oder Sintergefüge sowie Lunkerstellen durch die vorliegende Erfindung vermieden, so dass sie für innengepanzerte Extruderzylinderrohre kunststoffverarbeitender Maschinen aus metallurgischer, tribologischer und fertigungstechnischer Sicht eine äusserst wirtschaftliche Optimallösung für Maschinenhersteller und Kunststoffverarbeiter darstellt. Als Beispiel für einen erfindungsgemässen Bimetallzylinder wird ein Innenrohr von 1,5 m Länge mit einem Innendurchmesser von 120 mm und einer Wandstärke von 1,2 mm genannt, das in ein entsprechendes Aussenrohr von 20 mm Wandstärke eingebracht ist.

## Patentansprüche

1. Bimetallzylinder für Kunststoffverarbeitungsmaschinen, wie Kunststoffextruder, Kunststoffspritzmaschinen oder dergleichen bestehend aus einem dickwandigen, druckfesten und temperaturbeständigen Aussenrohr und einem dünnwandigen verschleiss- bzw. korrosionsfesten Innenrohr von kreiszylindrischem Querschnitt, dadurch gekennzeichnet, dass das Innenrohr spaltfrei mit radialen Druckkräften plastisch an das Aussenrohr kalt angeformt ist und unter tangentialer Druckspannung steht, die annähernd die Streckgrenze erreicht.

2. Bimetallzylinder nach Anspruch 1, dadurch gekennzeichnet, dass das Aussenrohr an seiner Innenwand zahlreiche Nuten oder Rillen hat.

3. Bimetallzylinder nach Anspruch 2, dadurch gekennzeichnet, dass diese Nuten oder Rillen in Längsrichtung des Rohres angeordnet sind.

4. Bimetallzylinder nach Anspruch 2, dadurch gekennzeichnet, dass diese Nuten oder Rillen in Umfangsrichtung des Rohres angeordnet sind.

5. Bimetallzylinder nach Anspruch 2, dadurch gekennzeichnet, dass diese Nuten oder Rillen schraubenlinienartig angeordnet sind.

## Claims

1. A bimetal cylinder for plastics processing machines, such as plastics extruders, plastics injection machines or the like, consisting of a thick-walled, pressure-tight and thermally-stable outer tube and a thin-walled, wear- and corrosion-resistant inner tube of circular cylindrical cross-section, characterised in that the inner tube is plastically formed in the cold at the outer tube without a gap, by radial compressive forces, and is under tangential compressive stress which nearly reaches the elastic limit.

2. A bimetal cylinder as claimed in claim 1, characterised in that the outer tube has numerous slots or grooves at its inner wall.

3. A bimetal cylinder as claimed in claim 2, characterised in that these slots or grooves are arranged in the longitudinal direction of the tube.

4. A bimetal cylinder as claimed in claim 2, characterised in that these slots or grooves are arranged in the circumferential direction of the tube.

5. A bimetal cylinder as claimed in claim 2, characterised in that these slots or grooves are arranged in a helical fashion.

**Revendications**

1. Cylindre bimétallique pour des machines de transformation de matières synthétiques, telles que des extrudeuses de matières synthétiques, des presses à injection pour des matières synthétiques ou des machines semblables, constitué par un tube extérieur stable thermiquement, à l'épreuve de la pression et à paroi épaisse, et par un tube intérieur à paroi mince résistant à l'usure ou à la corrosion, de section transversale cylindrique circulaire, caractérisé par le fait que le tube intérieur est formé à froid plastiquement sur le tube extérieur sans interstice, avec des forces de pression radiales, et est soumis à une contrainte de compression tangentielle qui atteint presque la limite apparente d'élasticité.

2. Cylindre bimétallique suivant la revendication 1, caractérisé par le fait que le tube extérieur comporte un grand nombre de gorges (ou de sillons) sur sa paroi intérieure.

3. Cylindre bimétallique suivant la revendication 2, caractérisé par le fait que ces gorges (ou sillons) sont disposées suivant la direction longitudinale du tube.

4. Cylindre bimétallique suivant la revendication 2, caractérisé par le fait que ces gorges (ou sillons) sont disposées suivant la direction périphérique du tube.

5. Cylindre bimétallique suivant la revendication 2, caractérisé par le fait que ces gorges (ou sillons) sont disposées hélicoïdalement.